Europäisches Patentamt

(19) European Patent Office

Office européen des brevets

(11) Publication number: **0 066 923**
A2

## (12) EUROPEAN PATENT APPLICATION

(21) Application number: 82200633.4

(51) Int. Cl.³: **G 01 B 11/16**, G 01 D 5/30

(22) Date of filing: 17.05.82

(30) Priority: 18.05.81 US 265031
26.04.82 US 371321

(43) Date of publication of application: 15.12.82
Bulletin 82/50

(84) Designated Contracting States: AT BE CH DE FR GB IT
LI LU NL SE

(60) Publication number of the earlier application in
accordance with Art. 76 EPC:

(71) Applicant: Scott, David R., 44064 North 28th Street,
Lancaster California 93534 (US)
Applicant: Rhoades, Thomas S., 420, Buckeye Drive,
Colorado Springs Colorado 80919 (US)

(72) Inventor: Scott, David R., 44064 North 28th Street,
Lancaster California 93534 (US)
Inventor: Rhoades, Thomas S., 420, Buckeye Drive,
Colorado Springs Colorado 80919 (US)

(74) Representative: Stephens, Michael John et al, M.J.
Stephens & Co. Royal Building 11 St. Andrew's Cross,
Plymouth Devon PL1 2DS (GB)

(54) Aircraft structural integrity assessment system.

(57) A system is provided for collecting and interpreting
data indicative of the effect of at least one of the
plurality of forces acting on an aircraft or helicopter
structure (112). The system comprises one or more
structural moment detectors (111), and electronic cir-
cuitry (114) for processing and manipulating signals
derived from the detector or detectors (111) in such a
manner as to produce secondary signals indicative of
the effect being monitored. In one embodiment, the
electronic circuity associated with each structural mo-
ment detector (111) is provided in the same housing
as the detector to form a unitary device termed a
structural information detector.

0066923

# AIRCRAFT STRUCTURAL INTEGRITY ASSESSMENT SYSTEM

This invention relates to systems for collecting and interpreting data reflecting the effect of at least a selected one of a plurality of forces acting on a fixed-wing or helicopter aircraft structure.

Structural moment detectors or flexural rigidity sensors are known which are constituted by optical sensors in the form of autocollimators insensitive to linear dynamic motion but responsive to angular deflection of one end of the sensor with respect to the other. For example, such sensors are disclosed in the patent to Rossire, U.S. No. 3,229,511 and in the publication entitled "The Structural Rigidity Sensor: Applications in Non-Destructive Testing", published by the Air Force Systems Command, United States Air Force (Frank J. Seiler Research Laboratory, Publication SRL-TR-75-0017, October, 1975). See also the U.S. patents to Okubo Nos. 4,159,422 issued June 26, 1979 and 4,164,149 issued August 14, 1979.

Systems which employ structural moment detectors to measure and record certain effects of forces acting on a structure are also disclosed in the publications described above. For example, the Rossire patent discloses an aircraft attitude control system in which a structural moment detector is used to sense wing loading and automatically adjust the attitude of the aircraft to maintain wing loading within safe operational limits. The Air Force publication and the Okubo patents disclose systems which employ structural moment detectors to obtain the "vibration signatures" of various structures such as airframes, buildings, aerospace vehicles, rotating machinery bearings, dams and the like.

It is an object of the present invention to improve on the systems referred to above as regards their application to the assessment of the structural

0066923

integrity of aircraft.

Accordingly, the present invention provides a system for collecting and interpreting data indicative of the effect of at least a selected one of a plurality of forces acting on an aircraft structure, characterised in that said system comprises, in combination: at least one structural moment detector carried by said structure for generating output signals in response to said plurality of forces acting on said structure; processing means for processing said output signals to modify the information content thereof, including where necessary, rejecting components of said signals indicative of the effects of extraneous forces other than said selected one; and signal-manipulating means for manipulating the processed signals output by the processing means to provide secondary signals responsive to the condition of said structure as a result of the application of said selected force.

The systems of the invention can employ substantially conventional structural moment detectors, the output of which is simply raw data which does not directly indicate or give useful information concerning the effect of forces acting on a structure to which the sensor is attached. In such cases, the raw data from the sensors is conditioned and processed by external electronics, including microprocessors and computational software, usually necessarily located at locations remote from the sensors, themselves.

Alternatively the systems of the invention can employ structural information detectors in which the raw signal from the optical sensor of an optical structure moment detector is converted and processed within a unitary device (either a single-piece device or a multi-component device in which each of the components is assembled to form an integral unit) such that the electrical signal output of the device has a directly useful information content which can be displayed or recorded by any conventional means or which can be directly utilized to activate control systems.

As used herein, the term "forces acting on a structure" is intended to include not only primary external forces applied to the structure but also includes secondary external or internal effects which flow from the application of external forces or changes in the environment of the structure, such as, for example, strain energy released within the structure as a result of cracking, thermal stresses, gravity-induced effects, electromagnetic forces and stresses, and the like.

The term "surface" as used herein is intended to mean and include not only the exterior surface of a structure, but also any natural or artificial internal surface thereof including, without limiting the generality thereof, planes passing through an axis of the structure.

The term "surface coordinate vector" as used herein is intended to mean both the normal and the tangent to the surface of a structure and any angle therebetween.

Embodiments of the invention will now be particularly described, by way of example, with reference to the accompanying diagrammatic drawings, in which:

Fig. 1 is a sectional view of a typical prior art structural moment detector;

Fig. 2 is a typical schematic of the LED driver circuit of the structural moment detector of Fig. 1;

- 4 -

0066923

Fig. 3 is a typical schematic of the readout electronics circuits of the structural moment detector of Fig. 1:

Fig 4 is a schematic drawing of a system, embodying the invention, for assessing the structural integrity of a fixed-wing aircraft;

Fig. 5 shows in greater detail the signal processing and buffering components of the processing electronics of Fig 4;

Fig. 6 depicts a system, embodying the invention, for assessing altered structural capability of aircraft components;

Fig. 7 depicts a system, embodying the invention, for use in connection with assessing the structural integrity of helicopters;

Fig. 8 is a generalised block diagram illustrating the major sub-components of a structural information detector suitable for use in the systems of Figures 4 to 7;

Fig. 9 is a circuit schematic depicting an analog circuit which functions to electrically interface the optical detector of the structural information detector of Figure 8 with signal-processing electronics;

Fig. 10 is a circuit schematic depicting the current source circuit for light-emitting diodes of the optical sensor portion of the Figure 8 structural information detector;

Fig. 11 is a sectional view of one particular form of the Figure 8 structural information detector;

Fig. 12 is a perspective view of another particular form of the Figure 8 structural information detector in which the components are carried by a semiconductor substrate; and

Fig. 13 is a perspective view of an optical system usable in the Figure 8 structural information detector as well as in the structural moment detectors or flexural rigidity sensors of the prior art.

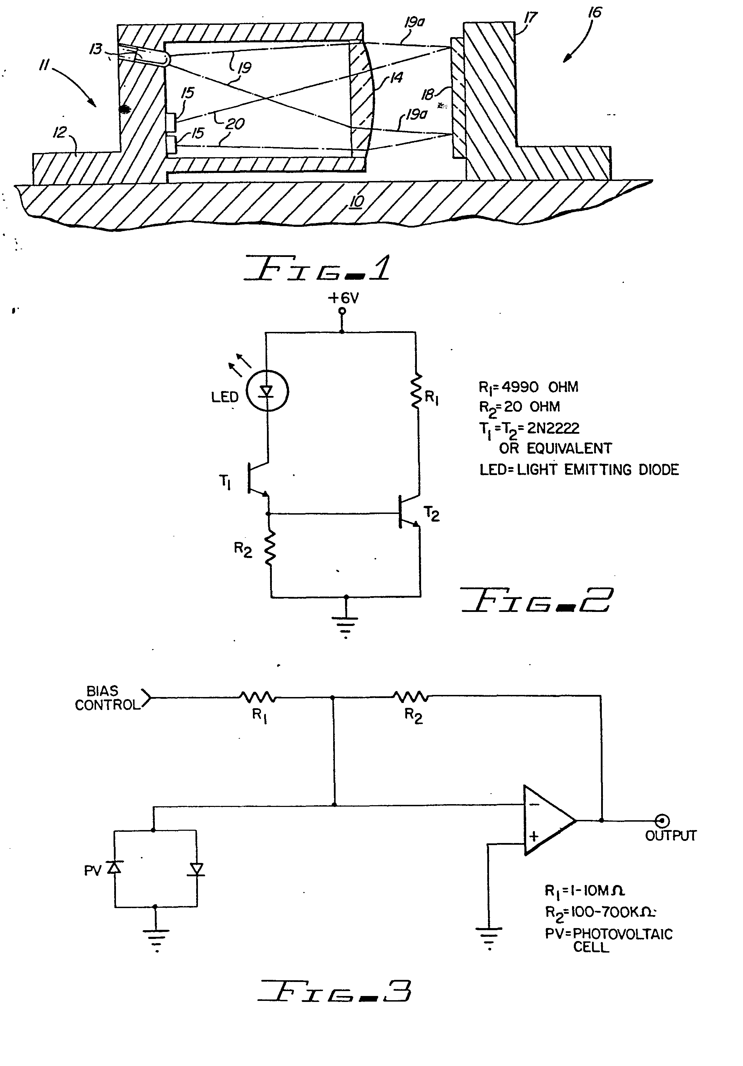

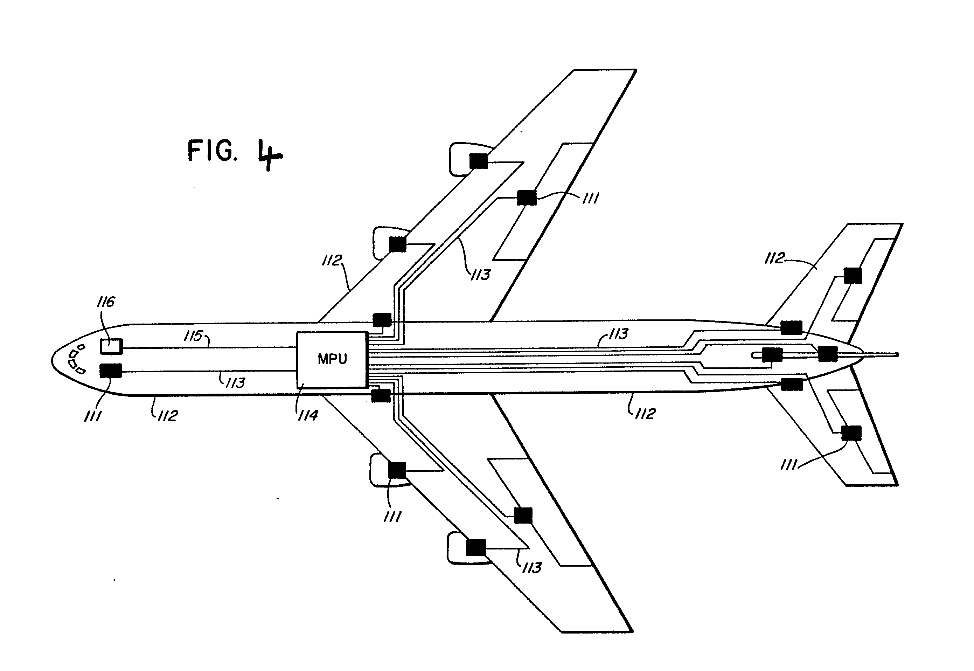

As used herein, the term "structural moment detector" means a device which measures the integral of the structure moment between two points on the structure. Such devices are known in the art, but, for clarity, a typical structural moment detector will be briefly described with reference to Figs. 1-3 and the accompanying descriptive material.

The structural moment detector shown in Figure 1 is basically an autocollimator that is insensitive to linear dynamic motions but responds to angular deflection of one end of the sensor with respect to the other. The structural moment detector illustrated consists of two separate parts which are mounted at spaced locations on a beam 10. One of the parts 11 is a support bracket 12 which carries a light-emitting diode (LED) 13, a collimating lens 14 and dual photovoltaic detectors 15. The other part 16 of the structural moment detector consists of a support bracket 17 which carries a plane front mirror 18. The two parts 11 and 16 are suitably joined by a bellows or other hood member (omitted for clarity of illustration) to exclude extraneous light. The LED 13 emits an infrared light beam 19 which is collimated by the collimating lens 14. The collimated light beam 19a impinges on the mirror 18 and, as indicated by the dashed lines 10, is reflected back through the collimating lens 14 to the photovoltaic cells 15. Angular motions, but not linear motions, of the mirror 18 result in varying amounts of infrared radiation reaching each of the photovoltaic cells 15. The difference in
voltage output of the photovoltaic cells 15 is then
proportional to the angular motion of the mirror 18
with respect to the cells 15.

Structural moment detectors of the Figure 1
form are capable of measuring the deflection of the
beam with a resolution of 1 milliarc second
($4.85 \times 10^{-9}$ radians) with a range of $\pm$ 6 arc seconds.
Where such accuracy is not required, such detectors can
be fabricated which have a resolution of at least
1 arc second with a dynamic range of $\pm 3^{\circ}$. These
detectors are capable of operating from DC to 50 MHz,
the upper limit being established by the frequency
limitation of the photovoltaic cells.

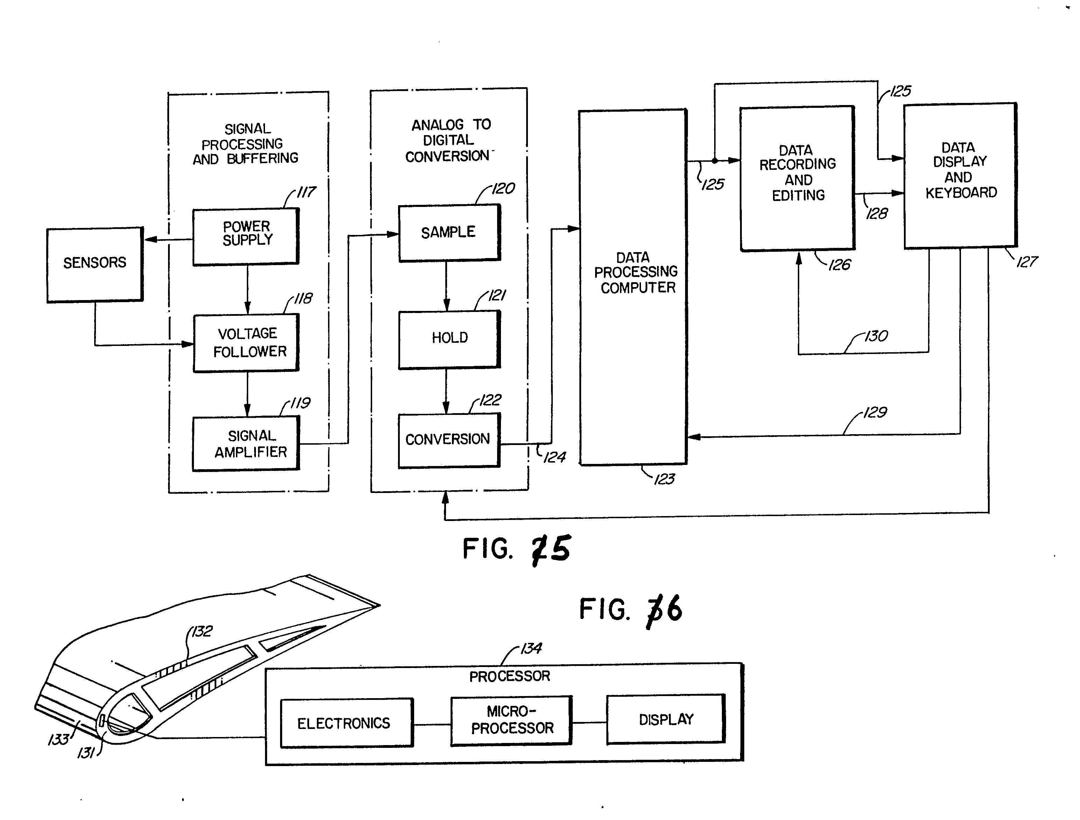

Typical circuits which are used in conjunction
with the mechanical components of the structural
moment detector of Fig. 1 are illustrated in Figs.
2 and 3. Fig. 2 is a schematic diagram of a suitable
LED driver circuit which is a simple constant current
source circuit which is required to provide a light
source with constant light intensity. A typical
suitable readout circuit is illustrated in Fig. 3,
which depicts an analog output circuit consisting of
a first stage amplifier with common mode rejection
that permits linear operation of the photovoltaic
cells.

In accordance with the present invention, structural moment
detectors (SMD's are employed in an aircraft structural integrity
assessment system which provide information concerning structural
fatigue, active crack detection, overload conditions,
load history and vibration for the purpose of assessing
structural loads on the aircraft, the remaining
lifetime of the aircraft, the condition of components
of the aircraft, the operational history of the aircraft,
the compliance of structural members with known loadings,
the current ability of the aircraft to carry its design loads and to provide more effective and efficient maintenance and test procedures.

The ultimate function of the aircraft structural integrity system of the present invention is to prevent catastrophic structural failure of the aircraft through structural integrity assessment.

Airframes are designed to meet desired strength and fatigue life requirements by projecting the average load environment of the aircraft over the expected airframe lifetime. These projections are, in turn, based on averaged load history data concerning similar aircraft designed for similar services. Since aircraft receive such diversified use, however, it is very difficult to assign confidence limits to the statistics thus assumed. One particular aircraft could experience a load history quite different from the expected load history assumed in the original design. In terms of accumulated damage, this airframe could actually be much "older" than the recorded engine or airframe hours would suggest. Nevertheless, aircraft are normally inspected for critical flaws based on the accumulated flying time or engine operation time. The assumption is that this number of hours is correlated with the load history actually experienced by the aircraft. The possibility for error is obvious; 100 hours flying along the front range of the Rocky Mountains can represent a considerably different load environment from 100 hours flying over Kansas wheatfields in the U.S.A. Nevertheless, present aircraft structural integrity assessment techniques almost invariably employ airframe or engine operating time to determine when inspections should be made, followed by actual inspection of the airframe to estimate the remaining fatigue lifetime.

According to the present invention, aircraft structural integrity assessment is performed using systems which include SMD's which act, in effect, to provide continuously updated real time assessment of the condition of the airframe. In particular, the systems effect one or more of the following functions: monitoring structural cracks as they occur and continuously assessing the remaining fatigue lifetime of the airframe (structural failure monitoring), warning of impending failure of the airframe due to loads which approach or exceed the design loads (load measurement), by warning of impending engine failure (vibration monitoring), and by directly measuring the compliance of structural members subject to known loads.

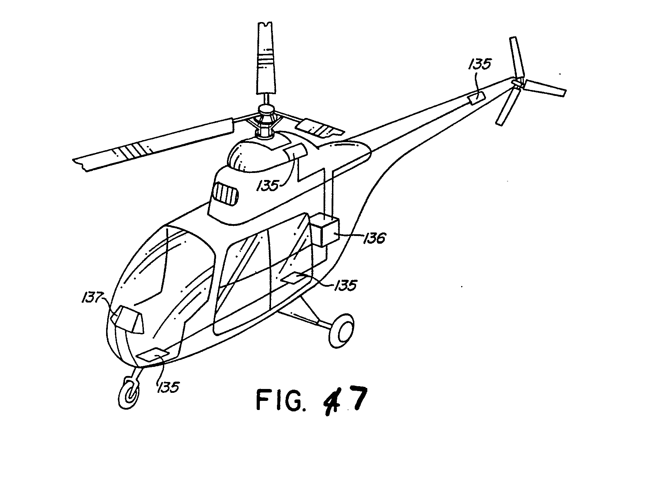

In the embodiment of the invention shown in Figure 4, a plurality of sensors in the form of SMD's 111 are mounted at selected locations on an airframe 112 and are properly oriented to be sensitive to the selected parameter to be measured. The SMD's 111 are connected through cabling 113 to the processing electronics 114 which in the present embodiment is in the form of a microprocessor unit (MPU) effecting the functions of signal processing and buffering, A-D conversion, data processing, data recording and editing; the output 115 of the unit 114 is suitably displayed at 116 and/or stored.

Fig. 5 shows the microprocessor unit 114 in greater detail. In the present example, each SMD is connected to a respective signal processing and buffering unit comprising a power supply 117, voltage follower 118, and signal amplifier 119. The power supply 117 provides conditioned power to the SMD 111 and powers the signal processing electronics. The voltage follower 118 converts the SMD output to a buffered analog voltage signal. The signal amplifier 119 amplifies the signal from the voltage follower 118.

The analog to digital converter of the processing electronics 114 either individually or collectively converts the analog information from the SMD sensors 111 to a digital format compatible with that required by the computing, processing, recording, editing and display units. Basically, the A-D converter samples the analog signal 120, holds the sampled value as a constant voltage 121 and converts the voltage level 122 to binary data.

The data processing computer 123 is a single frame computer capable of accepting the digital data 124 and processing and manipulating it in a predetermined programmed fashion to convert the digitized data into a representation 125 related to aircraft or engine structural integrity. The output 125 may include information concerning the existence of cracks, the severity of the cracks, the loads experienced by the aircraft, the load history, the fatigue lifetime of the structure, the integrity of engines or engine mounts, the vibration signatures and other information involving aircraft or engine structural integrity.

The signal processing effected by the unit 114 can involve, where necessary, the rejection from the sensor signals of components indicative of the effects of forces unrelated to being those intended to be monitored by the overall system; thus, for example, in a system designed to detect cracks by detection of the acoustic waves set up in a structure upon the occurrence of a crack, the characteristics of those waves enables them to be separated from the inertial and aerodynamic forces simultaneously experienced by the aircraft structure.

.The data recording and editing device 126 provides for permanent recording of all or part of the acquired data 125 for use at a later time and, additionally, provides the capability to manually edit the acquired data.

The data display and keyboard device 126 provides a visual display of either the data 125 acquired from the computer 123 or of the recorded edited data 128 from the data recording and editing unit. Additionally it provides, by means of feedback loop 129, for predetermined alteration of the means by which the data processor 123 is transforming acquired data 124 or, by means of feedback loop 130, the manner in which the data 125 is recorded, edited, displayed or digitized. The keyboard 125 is for data/command entry to the system.

a)   Structural Failure Monitoring

There are essentially two independent methods of detecting incipient failure of the structure. The first method involves measuring the frequency response and/or compliance of a structure and its variability with time. The second method involves measuring the seismic waves in the structure induced by cracking or other structural failure.

Most aircraft structures can be considered to be nearly elastic systems. Even structures formed with composite materials have vibration characteristics which are well defined and repeatable. It is known, both analytically and experimentally, that the natural modes of vibration of a structure are distinct, well-defined and a function of the physical dimensions of the structure and the internal properties of the material.  Any changes in these factors will change the natural frequencies and the associated vibrational modes of the structure.

Certain characteristics of the aircraft which change slowly over its lifetime, such as elasticity of the various structural members, may be initially calibrated by observing deflections under ground test conditions and thereafter continuously monitoring the vibrational mode frequencies and shapes.  In accordance with the invention, impending structural failure can be observed by monitoring the changes in these mode shapes and frequencies.  Further, shock waves from very small crack propogation centers can be easily detected.

Initial calibration of the aerodynamic coefficients may be accomplished by flying aircraft on specifiable paths, such as high speed taxi runs and take-offs that terminate in a landing on the same runway, optionally in opposite directions to eliminate effects of wind, after performing such prescribed manoeuvres  as stalls, turns and  high-speed passes.  Changes in aerodynamic coefficients due to environmental conditions, such as rain or ice, are then observed as changes in deflections without associated changes in elasticity (as observable through structural frequency of the natural modes).A rapidly changing variable  such as aircraft mass can be initially calibrated by observing deflections of the landing-gear  suspension points on the ground, and thereafter estimated by counting engine cycles and observing changes in mode shapes and frequencies associated with fuel depletion.

With these techniques, the components structural deflections which may have aerodynamic (lift, side force and drag),  inertial (g loading), thermal loading, engine vibration loading, transient aerodynamic loading, operation of aircraft subsystems (i.e. drag brakes, landing gear, flaps and engine controls) can be effectively separated.

With information sensed from the SMD sensor system, the changes in the frequencies of the natural modes of the structure due to changing physical dimensions and internal material properties will be determined by the microprocessor.

Each structure will have a distinct set of natural frequencies and will have a well-defined impulse response when the structure is now, unfatigued and has no existing cracks. When changes occur, such as cracking or fatiguing, the impulse response will change due to changing natural frequencies of the structure. Thus, continuous identification of either the impulse response or equivalently the frequency spectrum of the structure allows for identification of structural changes of appreciable size.

To implement active crack detection in an air vehicle that has been optimized for strength-to-weight ratio, where many components operate near the structural limits, requires an alternate real time approach. In such aircraft, the materials used such as aluminum, fibreglass and advanced composites, fatigue can readily reduce the useful life of the aircraft. If such an aircraft is subjected to inadvertent adverse loads or the structure material has unsuspected material defects, the onset of structural failure may occur with a catastrophic discontinuity. The early signature of such a failure may be manifested in exceedingly small cracks in the structure which can result in structural failure in relatively short order. The prior art procedure for crack detection in aircraft involves visual and/or electronic inspection of the aircraft on the ground. Since extremely small cracks are of great significance in these types of structures, inspection procedures are mostly costly and relatively ineffective.

According to one embodiment of the invention, these exceedingly small cracks are detected as they occur in flight by taking advantage of the fact that the formation of cracks involves a substantial release of strain energy. The release can be detected by the SMD sensor and, when processed by the microprocessor unit, the occurrence of the crack can be separated from the inertial and aerodynamic forces simultaneously inducing the observed structural deflections.

Cracks occur in a material in an attempt to relieve the stress created by incident forces. This results in a release of strain energy. This energy is expended in essentially two forms: 1) the formation of the surface of the crack, and 2) the kinetic energy for crack propagation.

It is well-known that the crack velocity is significantly less than the velocity of sound in the material. For example, in aluminum, the crack velocity is no more than 3/10 the speed of sound in the material. Therefore, if a crack propagates only a short distance, the acoustic fault has already been transmitted through the structure and is sensed by the SMD sensor means. This phenomenon is similar to an explosion in the air where the shock wave propagates much faster than the explosive products.

Materials, such as glass at room temperature, undergo brittle fracture. The same is not true of metals, for instance, which are capable of deforming by slip and twinning even at very low temperatures. It has been observed that even when a metal fails by brittle cleavage a certain amount of the plastic deformation almost always occurs prior to fracture. Metals therefore do not fracture as a result of pre-existing cracks but, in many cases, by cleavage cracks nucleated as a result of the plastic-deformation process. Present theories favor the concept of dislocation interactions as inducing cleavage nuclei. Dislocations on different slip planes can combine to form new dislocations on the fracture plane, thereby opening a crack. Alternately, slip on a given plane can be impeded by some sort of barrier leading to a pile-up of dislocations which, in turn, nucleate a crack. An obstacle to slip must be very strong so that it can stand the high stress at the head of the dislocation pile-up. Deformation twins and grain boundaries are obstacles with sufficient strength to stand the high stress.

Therefore, in materials such as metals, energy is lost due to plastic deformation in addition to crack formation. When slip takes place during the movement of a crack, energy is absorbed in nucleating and moving dislocations. If the energy required to overcome plastic deformation becomes too large, the crack may decelerate and stop. Thus, detection of these cracks after they occur is a very difficult task. At the instance of crack occurrence, however, energy release will excite lightly driven frequency modes and drive acoustic waves within the material. Because of the broad frequency response of the SMD, it can easily detect this energy release. Because of the sharpness of the pulse, time of arrival techniques can be used to ascertain the approximate location of origination of the acoustic pulse.

b) Vibration Monitoring

The concept of monitoring the vibration signature of a mechanical system for an indication of the mechanical health of the system is well established. Every operating mechanical system has a distinct vibration signature which is produced when the system is operating properly.

When a malfunction occurs the signature changes.

Appropriate observation and analysis of the vibration signature can therefore provide an early indication of the severity and location of possible trouble and can help to prevent costly catastrophic failure.

The actual vibration signature of an aircraft contains many frequencies. This is a result of different components vibrating at various discrete frequencies and various mechanical resonances and nonlinear combinations of those signals in the machine. The resultant signal at a measurement point is therefore a complex vibration wave form which must be processed to reduce it to its discrete frequency components for analysis.

A typical prior art vibration monitoring system consists of sensors (vibration transducers), a signal processor (monitoring system) and suitable displays or alarm generation devices. The sensors commonly in use are the piezoelectric accelerometer and the inductive velocity transducer. While there is limited agreement on the specific crossover frequency, there is general agreement that vibration severity is proportional to velocity at relatively low frequencies and proportional to acceleration at high frequencies. Thus, the applications of the piezoelectric and velocity transducers are naturally separated by frequency. In addition, velocity transducers are generally rugged, operate over wide temperature ranges, produce relatively high signal to noise outputs, but are limited to about 1000 Hz. Piezoelectric accelerometers are more sensitive to contamination. Both have frequency ranges which are significantly influenced by the method of attachment to the machine.

Both the velocity transducer and the piezoelectric accelerometer respond to displacements perpendicular to their mounting surface. The structural moment detector (SMD) however, measures the difference between planes perpendicular to the surface to which it is mounted, that is, the measurement motion is $90^O$ to that of other sensors.

The significant point is not that suitable mountings will permit direct replacement of velocity transducers, strain gauges and piezoelectric accelerometers. The significant point is that the SMD responds to transverse and longitudinal waves in a body which cause the surface to deflect as little as $3.5 \times 10^{-9}$ radians across the 1.5 inch length of the sensor (a surface displacement of $5.3 \times 10^{-3}$ microinches). This is a new and unique measurement and it provides new information for vibration monitoring systems, especially suited to aircraft structural integrity systems.

In the measurement of these ultra small deflections, the SMD has a frequency response which is essentially flat from 0 to 40 kHz. Combinations of velocity and acceleration sensors in the best vibration monitoring systems currently in use, provide a flat response from 0 to 20 kHz only.

c) Aircraft Load Measurement.

Another application of the systems of the present invention is the direct measurement of the ability of various aircraft structural members to carry a specific load. The output of the structural moment detector is

$$O_{FRS} = \frac{1}{EI} \int f(loading)\, dx$$

where $\frac{1}{EI}$ is the effective flexural rigidity of a member of the aircraft structure and f(loading) indicates the local bending moment due to the loading on the structural member. The ability of the structural member to carry its design load can be assessed by imposing a known load which is small relative to the design load on the structure and using the output of the SMD to determine the flexural rigidity of the structure. Changes in the ability of the structural member to carry its design load result in changes in the flexural rigidity of the member and these changes can be translated into an indication of the severity of the change. This measurement makes use of the static (IX) output of the SMD.

According to an embodiment of the present invention, the inverse of the above described operation is used to measure the actual load imposed to an aircraft structural member. If the flexural rigidity is known, then the sensor output is directly related to the load.

With appropriate signal processing it is possible to frequently evaluate the flexural rigidity of the member using autocorrelation techniques and then use that value of flexural rigidity to determine the existing loads. Thus, knowing both the load carrying capability of the member and the actual load, it is possible to predict impending failure.

d) Altered Structural Capability Measurement

According to this embodiment of the invention, a system is provided for assessing the structural capability of an aircraft or other structure which has been purposely modified or repaired or which has altered capability as a result of the accumulation of ice, wind damage or other environmental effects. This system uses the unique measurement of the SMD to infer the existing flexural rigidity of structural members. This measurement is then compared with design values and an assessment is made.

In one implementation of the system the sensor is mounted on a beam which has fractured and has been repaired by welding. The SMD output is processed to provide the flexural rigidity of the welded beam. This value is compared with the value of the unfractured beam to determine if the repair has returned the structure to its original strength.

In another implementation, the sensor is mounted to a beam whose strength has been increased by the addition of other members. The SMD output is processed to provide the flexural rigidity of the strengthened beam. This value is then compared with the design value to see if the desired strength has been achieved.

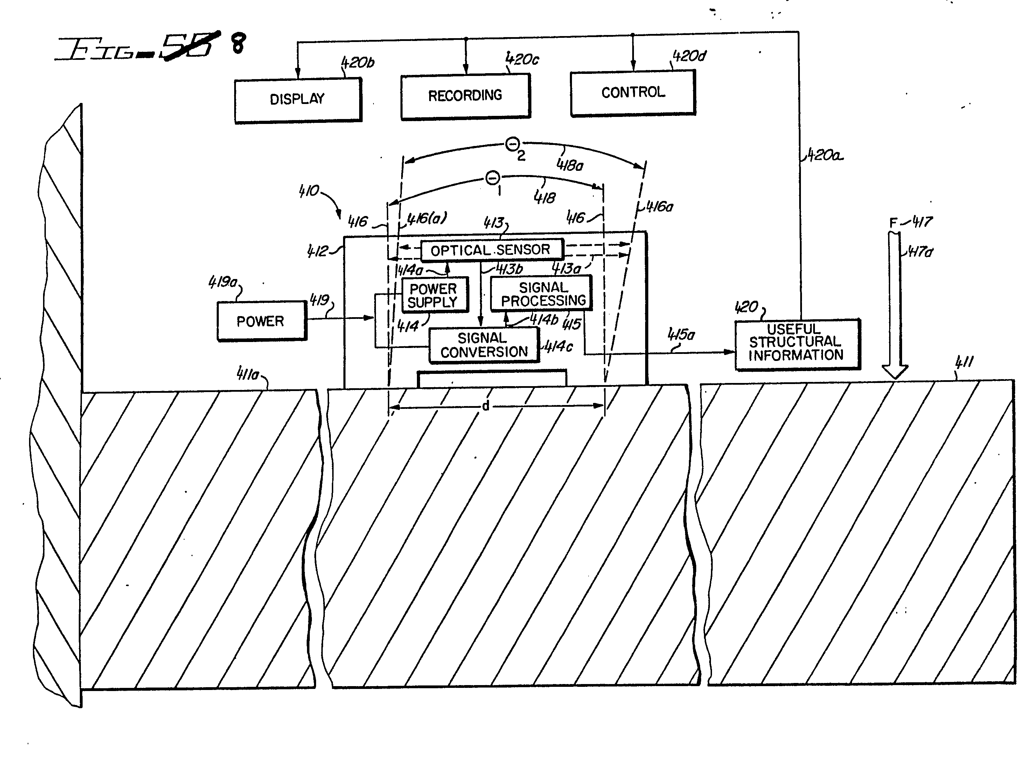

Yet a third implementation is depicted in Figure 6.. The SMD 131 is mounted near the leading edge of the airfoil 132. The SMD output is processed 134 to determine flexural rigidity. The value obtained differs from the design value as a result of the accumulation of ice 133. This difference is used as an indication to the pilot that his airplane wing has an accumulation of ice.

e) Structural Integrity Assessment Systems for Helicopters

According to this embodiment of the invention, a system is provided for assessing the structural integrity of helicopters. In this embodiment, certain aspects of the aircraft structural integrity systems, described above, and of other load and structural measurement systems, described below, are combined to produce a system tailored especially to the unique requirements of measuring the structural integrity of a helicopter structure. Helicopter structures present unique problems because of the relatively low frequency but large amplitude of rotation and vibration of the helicopter rotor system.

Technical failures, involving materials or components, which result in helicopter accidents include failures of: (1) power plant (2) power train (3) driveshaft (4) rotor blades and (5) rotor hubs. Primary causes of failures include incorrectly fitted parts, high stress concentration and cyclic excitation resulting in fatigue.

According to this embodiment, a plurality of sensors are mounted throughout the helicopter. Signal processing techniques, including adaptive filtering and adaptive noise cancellation techniques are used to separate the background noise from crack initiation and propagation signals. In addition, vibration signatures of the major components mentioned above are monitored. Any significant changes are used to assess structural integrity.

One mode of implementation of the invention is shown in Figure 7. SMD sensors 135 are mounted near rotating mechanical parts and along main structural members. The sensor outputs are fed to the electronics, microprocessing and recording unit 136. The data is processed according to the preprogrammed instructions and appropriate information is then displayed 137 to the pilot and/or recorded for use by maintenance personnel after landing.

The SMD sensors used in the embodiments of Figures 4 to 7 are structural moment detectors (SMD's), for example, of the prior art form shown in Figure 1. These sensors can alternatively be implemented by means of "structural information detectors" in which raw data from a structural moment detector is converted and processed within a unitary device (including the SMD) such that the signal output from the device has a directly useful information content.

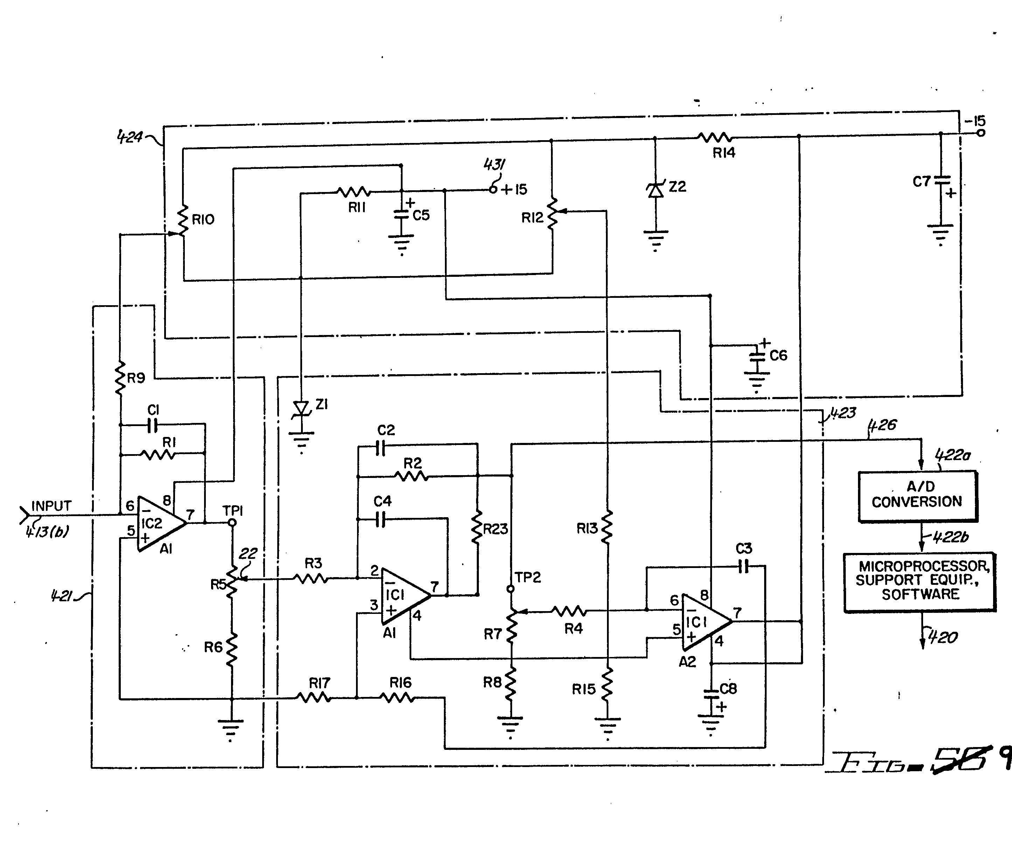

Fig. 8 is a block diagram illustrating the major sub-components of a structural information detector suitable for use in the systems described hereinbefore. The structural information detector, generally indicated by the reference numeral 410, is depicted for purposes of illustration as being mounted upon a simple cantilevered beam 411and consists of a housing 412, an optical sensor 413, sensor power supply 414, raw signal conversion circuitry 414c and signal-processing electronics, including a microprocessor and appropriate software 415. The optical sensor 413, for example, a structural moment detector of the type generally disclosed in U.S. patent 4,287,511 (sometimes also known as a "flexural rigidity sensor") measures, as indicated by the dashed line 413a, the relative orientation of surface coordinate vectors which are, as illustratively depicted in Fig. 8, normals 416 to the surface 411a of the beam 411. If a force F (417) is applied in the direction of the arrow 417a to the beam 411, resultant bending of the beam 411 will cause a change in the relative orientation of the surface coordinate vectors 416 to the positions indicated by the dashed lines 416a, i.e., from the angular orientation 418 $\theta1$ (shown in Fig. 8, illustratively, as $180^{\circ}$) to an angular orientation 418a $\theta2$ which (as illustratively depicted in Fig. 8) is greater than $\theta1$. Power 419 from an external power source 419a is supplied to the circuitry 414 which, as explained below, provides a regulated power supply 414a to the optical sensor 413. The raw data 413b from the optical sensor 413, which could be a variable voltage or a variable current, is supplied to the raw signal conversation portion of the circuitry 414, which converts the raw data, as will be further explained below, to a form which is the input 414b to the signal and data-processing electronics and software 415, which processes the converted signal 414b and provides, as the output 415a of the structural information detector 410, a signal which embodies useful structural information 420 which directly indicates the effect of the force F acting on the beam 11. As indicated by the line 420a, the useful structural information 420 can be utilised in any or all of a variety of ways, i.e., it can be used as the input to a direct display 420b which may be a simple galvanometric meter, liquid crystal display, light emitting diode display, cathode ray tube or the like. Also or alternatively, the useful structural information 420 can be used as the input to a semi-permanent or permanent recording device 420c, such a  paper recorder , magnetic recorder , semiconductor storage device , bubble memory storage device , or holographic storage device .  Also or alternatively, the useful structural information 420 can form the input to various control devices 420d such as servomotors and other similar electromechanical devices.

As will be appreciated by those skilled in the art, it may be necessary or desirable in certain end-use applications to employ an array of structural information detectors of the type generally illustrated in Fig. 8, in which case it may be necessary  or desirable to provide communication paths between some or all of the individual structural information detectors in the array and/or with suitable central data display, recording and/or control components, as well as with additional hardware and software which correlate the useful structural information outputs of the individual structural moment detectors in the array. These details have been omitted for the purpose of clarity.

The raw data output 413b of the optical sensor 413 is (referring to Fig. 9) the input to the signal processing electronics, including computational software therein depicted.  The function of the circuitry depicted in Fig. 9 is to convert the raw data input 413b from the optical sensor into data suitable for electronic data processing and then to perform the data-processing function to yield a signal, the components of which directly provide useful structural information. According to the presently preferred embodiment of the structural information detector, the conversion is performed with analog electronics, rather than digital. The analog electronics perform two distinct functions. First, the output signal 413b from the optical sensor is measured and converted to a proportional voltage in a voltage follower circuit which, for clarity of illustration, are those components which are located within the dashed line 421. The second function is to amplify the proportional voltage signal from the voltage follower circuit 421 by feeding it through a gain control 422 into an amplifier which, for purposes of clarity of description, are those components located within the dashed line 423. The voltage follower circuit 421 operates as a short circuit load for the photovoltaic cells of the optical sensor. Feedback is added in the amplifier circuit 423 to shape the upper end of the frequency response so that spurious high frequency noise is attenuated. This function is performed by applying the output of IC1 (pin 7) to the input (pin 6) of IC2 through a voltage divider formed by R7-R8. IC2 acts as a low-pass filter. The output of IC2 (pin 7) is fed back through R16 to the input 3 of IC1 to act as an automatic bias adjustment. An offset voltage adjustment is provided to remove any bias due to photocell mismatch.

The gain control 422 provides a means of balancing the mechanical gain of different sensors and compensating for components variation. The nominal adjustment range is ±15%. The amplifier 423 is a high gain direct-coupled amplifier with feedback to further attenuate high frequency noise levels. Nominal gain is 1.5 volts/ microamp and the bandwidth is normally initially set at 50-500 Hz. In essence, A2 is a variable cut-off low-pass filter. If the DC case is considered, its output will seek a level such that the voltage presented to pin 3 of A1 is equal to that presented to pin 2 by the voltage follower circuit. The scaling of the system is such that

$$U_{null} = V_{int} \ (R17/R16+R17) = V_{in}$$

where $V_{int}$ is the integrator output, $V_{in}$ is the first stage and $U_{null}$ is the input to A1, pin 2. Thus, for low frequency, $V_{int}$ represents a scaled value equal to or greater than $V_{in}$ independent of the gain in the second stage of the amplifier. The implication of this is that the gain of the second stage can be set very high for frequencies above the autonumm roll-off without completely losing DC information.

Support and bias circuits which include the components which are, for clarity of illustration, enclosed within the dashed line 424 are provided to provide conditioned power and bias voltages for the components of the voltage follower 421 and amplifier 423.

The output 426 of the amplifier 423 is an analog signal which is converted to a digital signal in the A-D converter 422a. A non-limiting, illustrative, exmaple of a suitable analog-digital converter is manufactured by the U.S. firm Analog Devices under number HAS1202.

The signal-processing electronics also includes a microprocessor 425 and appropriate computational software which converts the output signal 422b of the A-D converter 422a into electrical signals 420 which directly provide data related to the effect of the force acting on the structure to which the structural information detector is attached. In the presently preferred embodiment, this component includes a microprocessor, the necessary supporting devices and a power supply, details of which are omitted for purposes of clarity because they are well-known to those skilled in the art. Suitable non-limiting examples of microprocessors which can be employed are the TI9000 or the Intel 8086.

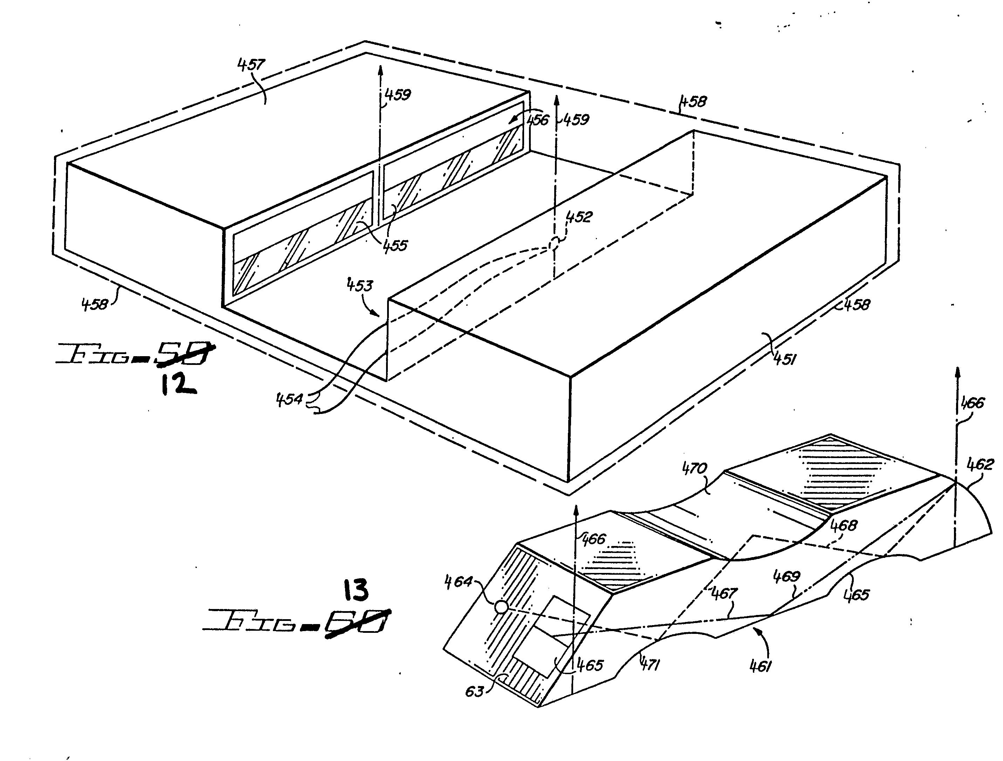

All of the elements described in Figs. 56 and 57 may be fabricated on a printed circuit board using standard integrated circuits or on a single thick film substrate where the circuits have been wire bonded to the substrate. In the embodiment of the detector described in connection with Fig. 12, these components may be made as a single integrated circuit on the same semiconductor substrate chip used in fabricating the optical sensor.

Another function of the signal-processing electronics is to provide a precise current to the light emitting diode of the optical sensor.

Typical non-limiting, illustrative, values of the components of Fig. 9 are set forth below:

Voltage Follower/Amplifier

        R1 - 220K
        R5 - 1K
        R6 - 2.2K
        R9 - 2.2M
        R23 - 82
        A1 - Operational Amplifier LF353/2

Second Stage Amplifier

        R2 - 680K
        R3 - 10K
        R4 - 1M
        R7 - 100K
        R8 - 10K

R13 - 2.2M
R15 - 220K
R16 - 10K
R17 - 1K
C2 - 47PF
C3 - 10MF
C4 - 5PF
A1 - Operational Amplifier LF 353/2
A2 - Operational Amplifier LF 353/2

Support and Bias Circuits

R10 - 100K
R11 - 1.8K
R12 - 100K
R14 - 1.8K
C5 - 10MF
C6 - 10MF
C7 - 10MF
C8 - 10MF
Z1 - LM336
Z2 - LM336

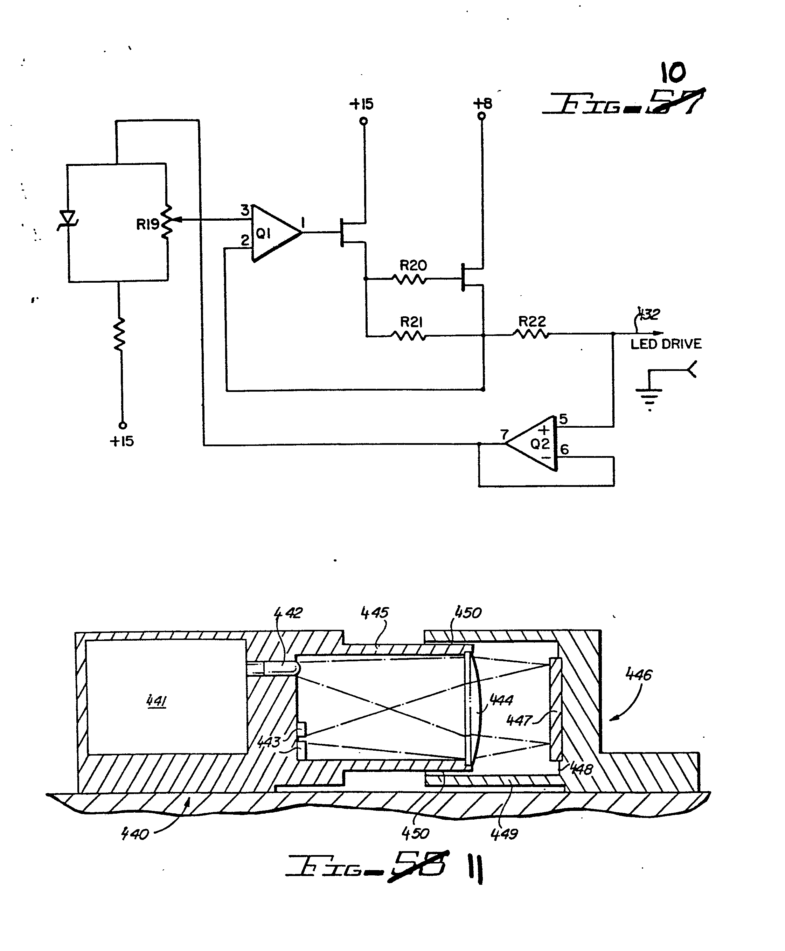

For the sake of clarity, the power supply circuitry has been separated from the circuitry of Fig. 9 and is shown schematically in Fig. 10. The 15 volt power supply 431 is provided by the support and bias circuitry 424 of Fig. 9.

The power supply circuitry of Fig. 10 utilises two amplifiers in a high gain feedback arrangement to provide the necessary precise current 432 to the light emitting diode.

Typical non-limiting, illustrative, values of the components of Fig. 10 are set forth below:

Power Supply

```
R18 - 3.3K
R19 - 10K
R20 - 10K
R21 - 10K
R22 - 47
C9 - 10MF
C10 - 10MF
IC3 - Operational Amplifier LF353/2
Q1 - 2N5457
Q2 - TIP21
```

Fig. 11 is a sectional view illustrating a particular form of structural information detector which consists of a first housing sub-assembly generally indicated by reference character 440 containing the sensor power supply/raw signal conversion/ signal-processing electronics 441 of Figs. 9 and 10, a light emitting diode 442, a pair of photovoltaic detectors 443 and a collimating lens 444 carried proximate the open end of a barrel portion 445 formed in the housing 440. A second housing sub-assembly, generally indicated by reference numeral 446, carries a plane surface mirror 447 on the inner end 448 of a mating barrel portion 449 formed in the housing sub-assembly 446. Although a substantial clearance 450 is shown between the barrel portion 445 formed in the first housing sub-assembly 40 and the barrel portion 449 formed in the second housing sub-assembly 446, it will be understood by those skilled in the art that this clearance is shown only for the purpose of clarifying the mechanical relationship of the two housing sub-assemblies 440 and 446. In actuality, the mating barrel portion 449 formed in the second housing sub-assembly 446 is shaped and dimensioned to receive the barrel portion 445 formed in the first housing sub-assembly 440 with an interference fit therebetween, to form a unitary structurally integrated device which excludes ambient light from the interior of the barrel portions 445 and 449 and which facilitates and assists in maintaining precise optical alignment of the two sub-assemblies.

Structural information detectors of the type depicted in Fig. 11 have been successfully manufactured and tested which are in the size range of as small as one inch in the major dimension. Present work indicates that, eventually, this can be reduced to 1/4-1/8" in the major dimension.

Fig. 12 illustrates another form of structural information detector in which all of its components are carried by any suitable semiconductor substrate, such as a silicon chip 451. The generally U-shaped chip 451 carries the light emitting diode 452 on an inner face 453 of one of the legs of the U-shaped chip and leads 454 for providing power to the light emitting diode. A pair of photovoltaic cells 455 are grown by known semiconductor manufacturing techniques on the inner face 456 of the opposing leg of the U-shaped chip 451. Bending of the chip 451 induced by bending of a structural member to which it is attached by any suitable technique, such as epoxy bonding, causes a variation in the light falling on the photocells 455, depending on the relative orientation of surface coordinate vectors (normals) 456. The circuitry of Figs. 9 and 10 is formed by known semiconductor manufacturing techniques in the portion 457 of the silicon chip 451. The entire chip is then received within a suitable housing indicated by the dashed lines 458 to protect the internal components from adverse ambient environmental effects and to prevent stray light from interfering with the operation of the optical components 452 and 455. As in the case of the embodiment of Fig. 11, devices such as those depicted in Fig. 12 can be manufactured in a size as small as 1/4-1/8" in the major dimension.

In the form of structural information detector depicted in Fig. 13, the components of the optical sensor 410 (Fig. 8) are carried by an elongate light transmission member, generally indicated by reference character 461, formed of a light-transmitting flexible material such as, for example, methacrylate polymers and copolymers known in the art. A concentrating lens 462 is formed in one end of the light-transmission member 61 and the other end 463 carries a light source 464 such as a LED and a pair of photocells 465 which generate electrical signals indicating the relative orientation of surface vector coordinates (normals) 466 to the surface of a structural member upon which the structural information detector is mounted. If desired, the length of the light-transmission path 467 can be lengthened by cutting or forming facets 468 in the external surfaces of the elongate light-transmitting member which will reflect light beams 468 transmitted from the LED to the concentrating lens 462 and which are then reflected 469 to the photocells 465. The entire optics system illustrated in Fig. 13, along with the sensor power supply/raw signal conversion/signal-processing electronics components of the structural information detector of Fig. 8, are then enclosed in a suitable housing to protect the optics and electronics components from adverse ambient conditions and from interference caused by stray light. The housing is omitted in Fig. 13 for purposes of clarity. Of course, by omission of the signal processing electronics, the Figure 13 optics system can be employed as a simple structural moment detector.

## CLAIMS

1. A system for collecting and interpreting data indicative of the effect of at least a selected one of a plurality of forces acting on an aircarft stucture (112), characterised in that said system comprises, in combination:

   a) at least one structural moment detector (111) carried by said structure (112) for generating output signals in response to said plurality of forces acting on said structure (112);

   b) processing means (114) for processing said output signals to modify the information content thereof, including, where necessary, rejecting components of said signals indicative of the effects of extraneous forces other than said selected one; and

   c) signal-manipulating means (114) for manipulating the processed signals output by the processing means to provide secondary signals responsive to the condition of said structure (112) as a result of the application of said selected force or forces.

2. A system according to Claim 1, characterised in that the or each said structural moment detector (111) and its associated processing and signal-manipulating means (114) is constituted by a respective structural information detector (410), said detector (410) comprising, in combination:

   a) a housing (412) adapted to be attached to the surface of the aircraft structure (112);

   b) optical means (413) within said housing (412) for detecting the relative orientation (413a) of spaced surface coordinate vectors (416a) of said structure , and for generating primary
signals (413b) in response to changes in
said orientation;

c) circuit means (414c) within said housing
(412) for converting said primary signals
(413b) to a form usable by signal-processing
electronics; and

d) signal-processing electronics means (415)
within said housing (412), including
computational software, for processing the
converted primary signals (414b) to
secondary signals (415a) which embody useful
information which directly indicates the
effect of at least one of a plurality of
forces (F) acting on said structure.

3. A system according to Claim 2, characterised
in that the optical means (413), circuit means (414c),
and signal-processing electronics means (415)
of the structural information detector (410)
are carried by a single-piece semiconductor substrate
(451) received within said housing (412).

4. A system according to Claim 2, characterised in
that the housing (412) of the structural information
detector (410) comprises first and second housing
sub-assemblies (440,446) and in that:

a) said first housing sub-assembly (440)
contains said circuit means (441), said signal-
processing electronics means (441), and those
components of said optical means (413) which
include a light source (442), a plurality of
photovoltaic detectors (443) and a
collimating lens (444); the light source (442)
and photovoltaic detectors (443) being
carried on the inner  face of a hollow barrel

portion (445) of said first housing sub-assembly (440) and said collimating lens (444) being carried proximate the open end of said barrel portion (445);

b) said second housing sub-assembly (446) contains, as another component of said optical means (413), a plane surface mirror (447) carried on the inner end (448) of a barrel portion (449) of the second housing sub-assembly (446), the two said housing barrel portions (445, 449) being shaped and dimensioned to mate one within the other with an interference fit therebetween to form a unitary structurally-integrated device; and

c) said first and second housing sub-assemblies (440,446) are mountable at spaced points on the aircraft structure.

5. A system according to Claim 2, characterised in that the said optical means (410) of the structural information detector comprises:

a) an elongate light-transmission member (461) formed of a light-transmitting flexible material and having a light-transmitting/receiving end (463) and a reflecting end;

b) a concentrating lens (462) formed in the reflecting end of the member (461);

c) a light source (464) carried by said light-transmitting/receiving end (463) of the member, the light source (464) being positioned such as to direct light through the member (461) toward said reflecting end;

d) light-receiving means (465) carried by the light-transmitting/receiving end (463) of the member, the light-receiving means (465) being arranged to receive light transmitted through said member from the light source (464) to the concentrating lens (462) and reflected thereby back through said member to the light-receiving means (465), and to generate electrical signals in response to the received light; and

e) means for connecting the said ends of the light-transmission member (461) to spaced points on the aircraft structure such that bending of the structure causes corresponding bending of the light-transmission member (461) and, in turn, causes a variation in the amount of light received by the light-receiving means (465).

6.   An aircraft characterised in that it is provided with a system according to any one of the preceding claims.

$F_{IG}-1$

+6V

LED

R₁

T₁

T₂

R₂

$R_1$= 4990 OHM
$R_2$= 20 OHM
$T_1$=$T_2$= 2N2222
   OR EQUIVALENT
LED= LIGHT EMITTING DIODE

$F_{IG}-2$

BIAS
CONTROL

R₁

R₂

PV

OUTPUT

$R_1$=1-10M$\Omega$
$R_2$=100-700K$\Omega$
PV=PHOTOVOLTAIC
   CELL

$F_{IG}-3$

FIG. 4

FIG. 75

FIG. 76

FIG. 47

FIG-8

DISPLAY — 420b

RECORDING — 420c

CONTROL — 420d

420a

410 · 416 · 412 · 419

OPTICAL SENSOR — 413

SIGNAL PROCESSING — 413a · 413b

POWER SUPPLY — 414a

SIGNAL CONVERSION — 414b · 414c · 415

POWER — 419a

USEFUL STRUCTURAL INFORMATION — 420

415a

F — 417 · 417a

411 · 411a

d

$\Theta_1$ · $\Theta_2$ · 418 · 418a · 416 · 416a

FIG-56 9

Fig-57

Fig-58

0066923

Fig-5B

12

Fig-6B

13